# EUROPÄISCHE PATENTSCHRIFT

(11) **EP 1 488 882 B1**
(45) Veröffentlichungstag und Bekanntmachung des Hinweises auf die Patenterteilung: **05.07.2006**
(21) Anmeldenummer: 03013930.7
(22) Anmeldetag: 20.06.2003
(51) Int. Cl.: B23K 26/42, G01M 11/00

(54) **Verfahren und Laserbearbeitungskopf mit einer Einrichtung zur Überwachung eines optischen Elements eines Bearbeitungskopfes einer Maschine zur thermischen Bearbeitung eines Werkstücks**
Method and laser beam machining head with an installation for monitoring an optical element of a working head of a machine for thermal processing of a workpiece
Méthode et tête d'usinage au laser avec une installation pour la surveillance d'un élément optique d'une tête d'usinage d'une machine servant à usiner une pièce

(43) Veröffentlichungstag der Anmeldung: 22.12.2004
(73) Patentinhaber: TRUMPF Laser GmbH + Co. KG, 78713 Schramberg (DE)
(72) Erfinder: Flaig, Rainer, 78664 Eschbronn (DE)
(74) Vertreter: Kohler Schmid Möbus

(56) Entgegenhaltungen:
- DE-A- 10 108 955
- DE-A- 10 113 518
- DE-A- 10 130 875
- DE-A- 19 507 401
- DE-A- 19 605 018
- US-A- 6 118 527
- PATENT ABSTRACTS OF JAPAN vol. 008, no. 124 (M-301), 9. Juni 1984 (1984-06-09) & JP 59 027793 A (TOKYO SHIBAURA DENKI KK), 14. Februar 1984 (1984-02-14)

## Beschreibung

Die Erfindung betrifft einen Laserbearbeitungskopf und ein Verfahren zur Überwachung eines optischen Elements des Laserbearbeitungskopfes mithilfe der Erfassung von Streulicht an dem optischen Element und von Streulicht an einem zusätzlichen optischen Element als Referenz.

Unter einem optischen Element wird im Rahmen der Erfindung eine Fokussierlinse, ein Schutzglas oder ein Fenster des Bearbeitungskopfes verstanden.

Durch die DE 195 07 401 A1 ist die Überwachung der Schutzglasverschmutzung mithilfe einer Referenzmessung an einem ersten und einer Messung an einem verschmutzten zweiten optischen Element bekannt geworden.

Bei der Bearbeitung von Werkstücken mithilfe einer Maschine zum thermischen Schweißen oder Schneiden, insbesondere einer Laserbearbeitungsmaschine, kommt es im Bearbeitungsbereich des Werkstücks zu Spritzern und Schmauch. Die Spritzer und der Schmauch können sich auf einer dem Werkstück zugewandten Optikoberfläche eines optischen Elements des Bearbeitungskopfes der Maschine niederschlagen und das optische Element verschmutzten. Spritzer können in die Optikoberfläche eingebrannt werden. Schmauch lagert sich auf der Optikoberfläche ab und iässt sich bis zu einem bestimmten Grad auch wieder von der Optikoberfläche entfernen. Ablagerungen oder Beschädigungen der Optikoberfläche führen zu erhöhter Absorption der Laserstrahlung. Infolgedessen erhöht sich die thermische Belastung des optischen Elements. Dies führt letztlich zu einer spürbaren Minderung der im Bearbeitungsbereich verfügbaren Laserleistung. Bei starker Verschmutzung, insbesondere durch Spritzer, kann die erhöhte Absorption der Laserstrahlung zur Zerstörung des optischen Elements führen.

Daher ist eine frühzeitige Erkennung von Spritzern oder Schmauch auf dem optischen Element notwendig, um eine konstante thermische Leistung im Bearbeitungsbereich des Werkstücks zu gewährleisten und die Zerstörung des optischen Elements zu verhindern, indem die Maschine zur thermischen Bearbeitung rechtzeitig abgeschaltet wird oder eine Reinigung bzw. ein Austausch des optischen Elements angezeigt wird.

Die Erfindung befasst sich mit der Messung von Streulicht am Schutzglas, welches durch Streuung von Anteilen des Bearbeitungslaserstrahls entsteht.

Durch die DE 195 07 401 C2 ist die Erfassung und lineare Auswertung von Streulicht an der Schutzglaskante bekannt geworden. Ein Referenzmesswert wird erzeugt, indem an einem weiteren sich im Strahlengang befindenden transmittierten Element ebenfalls das Streulicht gemessen wird. Auf diese Weise wird der Einfluss der Laserleistung auf das Messsignal kompensiert. Störungen durch Rückreflexion vom Werkstück, die Schweißfackel, Fremdlicht etc. stören jedoch das Auswertesignal, da diese Störungen nur auf das Schutzglas und nicht auf das referenzbildende Element einwirken. Die lineare Auswertung kann zu Problemen hinsichtlich einer Übersteuerung und Untersteuerung bei der Auswertung führen.

Verschmutzungen durch Schmauch können nicht sicher detektiert werden, da Schmauch nur wenig Streulicht an der Schutzglaskante erzeugt.

Der Erfindung liegt die Aufgabe zugrunde, die Erkennung der Verschmutzung des optischen Elements des Laserbearbeitungskopfes weiter zu verbessern.

Diese Aufgabe wird durch einen Laserbearbeitungskopf und ein Verfahren zur Überwachung eines optischen Elements des Laserbearbeitungskopfes mithilfe der Erfassung von Streulicht an dem optischen Element und von Streulicht an einem zusätzlichen, benachbarten optischen Element als Referenz gelöst, wobei eine Erfassung des Streulichts im Zwischenraum zwischen dem ersten und dem zweiten optischen Element vorgesehen ist. Zusätzlich zur Verschmutzung durch Spritzer ist auch die Verschmutzung durch Schmauch erfassbar, weil das Streulicht im Zwischenraum auf Schmauchbildung an der Optikoberfläche des optischen Elements zurückgeht.

Durch den Einsatz einer logarithmischen Streulichtmessung in Verbindung mit einer Verwendung eines zusätzlichen optischen Elements zur Referenz ergeben sich folgende Vorteile:

Durch eine logarithmische Streulichterfassung lassen sich die Streulichtsignale im Bereich von über 5 Dekaden (100dB) erfassen und auswerten. Damit können die Signale bei Laserleistungen im W - KW-Bereich und bei unterschiedlichsten Verschmutzungen und "additiven" Störgrößen, wie z.B. Rückreflexionen und Schweißfackel, sicher detektiert werden.

Der Einsatz eines zusätzlichen sauberen Schutzglases (könnte auch z.B. ein anderes benachbartes optisches Element im Strahlengang sein, z.B. die Fokussierlinse) dient zur Referenz der Messsignale. Das zusätzliche optische Element wird genauso wie das verschmutzte optische Element von allen Lichtanteilen (Laserlicht, reflektiertes Laserlicht, Schweißfackel...) durchsetzt. Das Signal an dem zusätzlichen optischen Element wird ebenfalls per Photodiode erfasst und logarithmisch ausgewertet.

Bevorzugt ist es, dass eine in einen Bearbeitungskopf der Maschine ein- und aussteckbare Kassette oder Schublade zur Halterung der optischen Elemente vorgesehen ist, wobei auch der Detektor an der Kassette angebracht sein kann. Dies erleichtert den Austausch des optischen Elements und/oder zugehöriger Elemente zur Überwachung wesentlich. Verbindungsbohrungen in der Kassette zwischen den optischen Elementen und den Detektoren werden mit Glasstopfen verschlossen, um das Eindringen von Schmutz- oder Staubpartikeln zu verhindern.

Auch die Elektronik zur Auswertung der Intensität des gestreuten Lichtstrahls kann an der Kassette angebracht sein. Diese Anbringung wirkt sich vorteilhaft hinsichtlich einer Reduzierung der Störempfindlichkeit des Messverfahrens aus. Die Anordnung ermöglicht auch eine geringe Kabellänge. Die Elektronik kann auch eine Speichereinrichtung für Korrekturdaten / Kennlinien aufweisen.

Optische Elemente, Detektor und Elektronik zur Signalauswertung können eine modulare Einheit bilden, welche als Baugruppe an oder in der Kassette untergebracht und somit dem Bearbeitungskopf als kalibrierbares Modul entnommen bzw. zugeführt werden kann. Beim Einstecken des Moduls werden die erforderlichen elektrischen oder mechanischen Kontakte automatisch durch Steckverbindungen hergestellt.

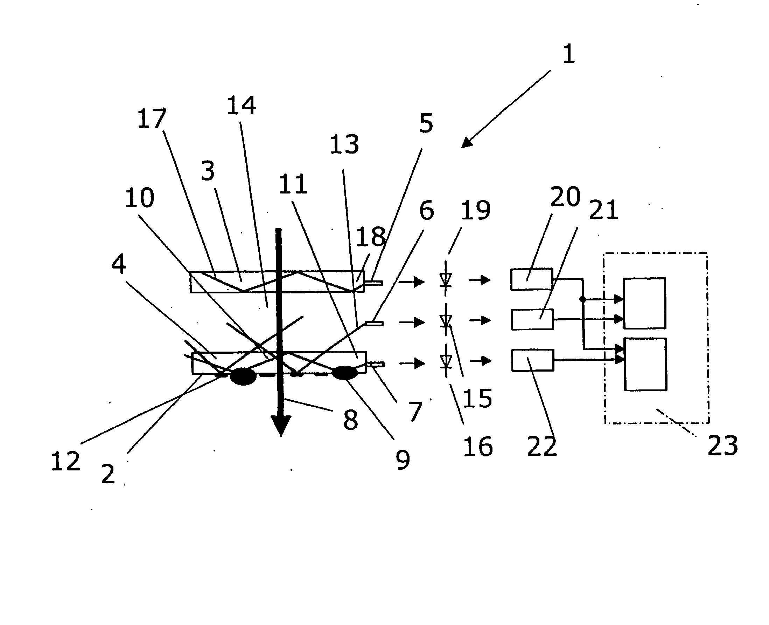

Ein bevorzugtes Ausführungsbeispiel der Erfindung ist in der Zeichnung schematisch dargestellt und wird nachfolgend mit Bezug zur Figur der Zeichnung näher erläutert.

Die **Figur** zeigt das Prinzip einer Überwachung einer Verschmutzung auf einer Optikoberfläche eines Schutzglases einer Laserbearbeitungsmaschine.

Wie aus der Figur ersichtlich, umfasst eine Einrichtung **1** zur Überwachung der Verschmutzung einer Optikoberfläche **2** zwei optische Elemente, d.h. ein erstes und ein zweites Schutzglas **3** bzw. **4**, drei Glasstopfen **5** bis **7** und drei Sensoren **15, 16** und **19** zur Erfassung von Streulicht. Die optischen Elemente können reine Schutzgläser oder auch Linsen oder dergleichen sein. Zur praktischen Umsetzung der Erfindung sind die Schutzgläser 3 und 4 in einer nicht dargestellten "Schublade" gehaltert und können vom Anwender auf einfache Weise ausgetauscht werden.

Ein fokussierter Laserstrahl **8**, ausgehend von einem nicht näher gezeigten Bearbeitungskopf einer Laserbearbeitungsmaschine, trifft zur Bearbeitung auf ein ebenfalls nicht dargestelltes Werkstück. Bei der Bearbeitung des Werkstücks verschmutzt das zweite Schutzglas. In Folge der Verschmutzung wird der Bearbeitungsstrahl geschwächt. Das Bearbeitungsergebnis des Werkstücks verschlechtert sich. Weitere Bauteile des Bearbeitungskopfes würden einer erhöhten Belastung ausgesetzt, sofern die Bearbeitung des Werkstücks trotz Verschmutzung fortgesetzt wird.

Die Intensität des Streulichtes kann als Maß für die Verschmutzung von einer nachgeschalteten Elektronik ausgewertet werden, um die Bearbeitung des Werkstücks bei Überschreiten eines Grenzwertes zu unterbrechen und das zweite Schutzglas 4 auszutauschen oder die erforderliche Reinigung anzuzeigen.

Die Verschmutzung kommt durch Spritzer oder Schmauch zustande. Es können Spritzer **9** entstehen, welche sich auf der Optikoberfläche 2 des zweiten Schutzglases 4 niederschlagen und teilweise in die Optikoberfläche 2 eingebrannt werden. Die Spritzer 9 führen zur Entstehung von Streulicht **10**, welches vorwiegend am Schutzglasrand **11** austritt. Es kann sich auch Schmauch **12** auf der Optikoberfläche 2 niederschlagen, so dass Streulicht **13** vorwiegend in den Optikzwischenraum **14** zwischen dem ersten Schutzglas 3 und dem zweiten Schutzglas 4 eintritt.

Zur Überwachung der Verschmutzung werden die Streulichtwerte am Schutzglasrand 11 und im Optikzwischenraum 14 erfasst. Hierzu werden die Lichtanteile über kleine Glasstopfen 6 und 7 zu Photodioden 15 und 16 geführt. Hierbei ist es wichtig, dass zwischen dem Glasstopfen und der Schutzglaskante eine Auslassung von etwa 0.2 mm verbleibt, um ein Verkratzen des Stopfens oder der Schutzglaskante zu vermeiden. Die Photodioden 15 und 16 und die Auswerteschaltung sind ebenfalls in den nicht dargestellten Halter (Schublade) integriert.

Zur Durchführung und Auswertung der Schutzglasüberwachung erfolgt neben der Erfassung von Streulicht 10 und 13 auch eine Erfassung des in das erste Schutzglas 3 eingekoppelten Streulichts **17** an dem ersten sauberen Schutzglas 3. Es werden das eigentliche Schutzglas (zweites Schutzglas 4) und der Bereich über dem zweiten Schutzglas 4 sowie ein zusätzliches Schutzglas (erstes Schutzglas 3) überwacht.

Das Streulicht soll an insgesamt drei verschiedenen Stellen mittels Sensoren detektiert werden:
1. am Schutzglasrand **18** des ersten Schutzglases 3 (Referenz);
2. am Schutzglasrand 11 des zweiten Schutzglases 4 (Spritzerüberwachung);
3. oberhalb des zweiten Schutzglases 4 zwischen dem ersten Schutzglas 3 und dem zweiten Schutzglas 4 (Schmauchüberwachung).

Durch die dreifache Messung können der Schutzglasverschmutzungsgrad und die Verschmutzungsart (Spritzer, Schmauch)überwacht werden.

Je nach Verschmutzungsgrad, Laserleistung, Störlicht und Rückreflexionen steigen die Pegel unterschiedlich stark an. Die von den Photodioden 15 und 16 und von einer Photodiode **19** für das Streulicht 17 an dem ersten Schutzglas 3 erzeugten Signale werden von Mitteln **20** bis **22** zur Logarithmierung der Signale entsprechend überarbeitet. Die Photodiodenstromsignale werden logarithmisch erfasst und in eine Spannung umgesetzt. Die logarithmierten Signale werden durch Differenzbildung beispielsweise in einem µ-Controller **23** ausgewertet. Die Streulichtmessung bezüglich der Kollimationslinse und deren Auswertung erfolgt nach dem gleichen Prinzip (nicht eingezeichnet).

Die Lichtpegel können aufgrund des großen Signalbereichs der log. Auswertung im Bereich von über 100dB (5 Dekaden) verarbeitet werden. Aus den Differenzen der einzelnen logarithmierten Signale lassen sich die Verhältnisse der Signale zueinander bestimmen.

Für die Schmaucherkennung wird folgende Auswertung durchgeführt:
log(Signal _{Zwischenraum})-log(Signal _{Referenz}) = log(Signal _{Zwischenraum} /Signal _{Ref·}).

Für die Spritzererkennung wird folgende Auswertung durchgeführt:
log(Signal _{Optikoberfläche})-log(Signal _{Referenz}) = log(Signal _{Optikoberfläche}/ Signal _{Ref.})

Da sich Signalschwankungen, verursacht durch Rückreflexionen, Schwankungen in der Laserleistung, Fremdlicht etc. auf alle Sensoren gleich auswirken, wird die Verhältnisbildung und somit die Schutzglasüberwachung nicht bzw. nur gering gestört. Damit können der Verschmutzungsgrad und die Verschmutzungsart (Schmauch oder Spritzer/Einbrand) im Laserleistungbereich von W bis kW ermittelt werden. Das Differenzsignal bzw. der Verhältniswert gibt den Verschmutzungsgrad wieder und kann direkt zur Auswertung verwendet werden. Messungen haben ergeben, dass der "logarithmierte Verhältniswert" sehr gut mit der Verschmutzung korreliert. Durch die Beziehung auf eine Referenz ist der Messwert weitgehend stabil gegenüber den genannten Störgrößen und der Laserleistung.

Die Anzeige des Verschmutzungsgrades des Schutzglases kann direkt über eine Leuchtbalkenanzeige an der Schutzglaskassette erfolgen. Alternativ werden die ausgewerteten Signale an die Lasersteuerung übermittelt und in einem Bedienprogramm des Lasers angezeigt.

### BEZUGSZEICHENLISTE

- 1: Einrichtung zur Überwachung
- 2: Optikoberfläche
- 3: Erstes Schutzglas
- 4: Zweites Schutzglas
- 5: Glasstopfen
- 6: Glasstopfen
- 7: Glasstopfen
- 8: Laserstrahl
- 9: Spritzer
- 10: Streulicht
- 11: Schutzglasrand
- 12: Schmauch
- 13: Streulicht
- 14: Zwischenraum
- 15: Diode
- 16: Diode
- 17: Streulicht
- 18: Schutzglasrand
- 19: Diode
- 20: Logarithmierer
- 21: Logarithmierer
- 22: Logarithmierer
- 23: Controller

## Patentansprüche

1. Verfahren zur Überwachung eines optischen Elements (4) eines Laserbearbeitungskopfes mithilfe der Erfassung von Streulicht (10) an dem optischen Element (4) und von Streulicht (17) an einem zusätzlichen optischen Element (3) als Referenz, **dadurch gekennzeichnet, dass** eine Erfassung des durch eine Verschmutzung des optischen Elements (4) entstehenden Streulichts (13) im Zwischenraum (14) zwischen dem ersten (3) und dem zweiten (4) optischen Element vorgesehen ist.

2. Verfahren nach Anspruch 1, **dadurch gekennzeichnet, dass** die erfassten Signale durch Mittel (20, 21, 22) zur Logarithmierung und Auswertung verarbeitet werden.

3. Verfahren nach Anspruch 2, **dadurch gekennzeichnet, dass** die Auswertung der Differenz des logarithmierten Messsignals und des logarithmierten Referenzwerts durch einen µ-Controller (23) erfolgt.

4. Laserbearbeitungskopf mit einem optischen Element (4), einem zusätzlichen optischen Element (3) als Referenz und mit einer Einrichtung (1) zur Überwachung des optischen Elements (4), wobei die Einrichtung (1) Sensoren (16,19) zur Erfassung von Streulicht (17) an dem optischen Element (4) und an dem zusätzlichen optischen Element (3) aufweist, **dadurch gekennzeichnet, dass** die Einrichtung (1) einen Sensor (15) zur Erfassung von Streulicht (13) im Zwischenraum (14) zwischen dem ersten (3) und dem zweiten (4) optischen Element aufweist.

5. Laserbearbeitungskopf nachAnspruch 4, **dadurch gekennzeichnet, dass** die Einrichtung (1) zur Überwachung des optischen Elements (4) Mittel (20, 21, 22) zur Logarithmierung und Auswertung der erfassten Signale aufweist.

6. Laserbearbeitungskopf nach Anspruch 5, **dadurch gekennzeichnet, dass** die Einrichtung (1) zur Überwachung des optischen Elements (4) einen µ-Controller (23) zur Auswertung der Differenz des logarithmierten Messsignals und des logarithmierten Referenzwerts aufweist.

7. Laserbearbeitungskopf nach einem der Ansprüche 4 bis 6, **dadurch gekennzeichnet, dass** eine in den Bearbeitungskopf ein- und aussteckbare Kassette zur Halterung der optischen Elemente und des µ-Controllers vorgesehen ist.

8. Laserbearbeitungskopf nach Anspruch 7, **dadurch gekennzeichnet, dass** an der Kassette eine Leuchtbalkenanzeige vorgesehen ist, die den Verschmutzungsgrad des optischen Elements (4) anzeigt.

## Claims

1. Method for monitoring an optical element (4) of a laser processing head by means of detecting scattered light (10) at the optical element (4) and scattered light (17) at an additional optical element (3) as a reference, **characterised in that** a means for detecting the scattered light (13) which occurs owing to contamination of the optical element (4) is provided in the intermediate space (14) between the first optical element (3) and the second optical element (4).

2. Method according to claim 1, **characterised in that** the signals detected are processed by means (20, 21, 22) for logarithmising and evaluation.

3. Method according to claim 2, **characterised in that** the evaluation of the difference between the logarithmised measured signal and the logarithmised reference value is carried out by a µ controller (23).

4. Laser processing head having an optical element (4), an additional optical element (3) as a reference and having a device (1) for monitoring the optical element (4), the device (1) having sensors (16, 19) for detecting scattered light (17) at the optical element (4) and at the additional optical element (3), **characterised in that** the device (1) has a sensor (15) for detecting scattered light (13) in the intermediate space (14) between the first optical element (3) and the second optical element (4).

5. Laser processing head according to claim 4, **characterised in that** the device (1) for monitoring the optical element (4) has means (20, 21, 22) for logarithmising and evaluating the signals detected.

6. Laser processing head according to claim 5, **characterised in that** the device (1) for monitoring the optical element (4) has a µ controller (23) for evaluating the difference between the logarithmised measured signal and the logarithmised reference value.

7. Laser processing head according to any one of claims 4 to 6, **characterised in that** a cartridge which can be fitted into and removed from the processing head is provided for retaining the optical elements and the µ controller.

8. Laser processing head according to claim 7, **characterised in that** there is provided on the cartridge an illuminated bar display which indicates the degree of contamination of the optical element (4).

## Revendications

1. Procédé de surveillance d'un élément optique (4) d'une tête d'usinage au laser par la saisie de lumière diffuse (10) sur l'élément optique (4) et de lumière diffuse (17) sur un élément optique supplémentaire (3) utilisé comme référence, **caractérisé par le fait qu'**il est prévu une saisie de la lumière diffuse (13) résultant d'un encrassement de l'élément optique (4) dans l'espace (14) entre le premier (3) et le deuxième (4) élément optique.

2. Procédé selon la revendication 1, **caractérisé par le fait que** les signaux saisis sont traités par des moyens (20, 21, 22) de logarithmisation et d'évaluation.

3. Procédé selon la revendication 2, **caractérisé par le fait que** l'évaluation de la différence du signal de mesure logarithmisé et de la valeur de référence logarithmisée est réalisée par un µ-contrôleur (23).

4. Tête d'usinage au laser avec un élément optique (4), un élément optique supplémentaire (3) utilisé comme référence et avec un dispositif (1) de surveillance de l'élément optique (4), le dispositif (1) présentant des capteurs (16, 19) pour la saisie de lumière diffuse (17) sur l'élément optique (4) et sur l'élément optique supplémentaire (3), **caractérisée par le fait que** le dispositif (1) présente un capteur (15) pour la saisie de lumière diffuse (13) dans l'espace (14) entre le premier (3) et le deuxième (4) élément optique.

5. Tête d'usinage au laser selon la revendication 4, **caractérisée par le fait que** le dispositif (1) de surveillance de l'élément optique (4) présente des moyens (20, 21, 22) de logarithmisation et d'évaluation des signaux saisis.

6. Tête d'usinage au laser selon la revendication 5, **caractérisée par le fait que** le dispositif (1) de surveillance de l'élément optique (4) présente un µ-contrôleur (23) pour l'évaluation de la différence du signal de mesure logarithmisé et de la valeur de référence logarithmisée.

7. Tête d'usinage au laser selon l'une des revendications 4 à 6, **caractérisée par le fait qu'**il est prévu une cassette embrochable et débrochable dans la tête d'usinage pour la fixation des éléments optiques et du µ-contrôleur.

8. Tête d'usinage au laser selon la revendication 7, **caractérisée par le fait qu'**il est prévu sur la cassette un indicateur à barre lumineuse qui indique le degré d'encrassement de l'élément optique (4).
